Europäisches Patentamt

European Patent Office

Office européen des brevets

(19)

(11) Publication number:

**0 290 095**

**A1**

## EUROPEAN PATENT APPLICATION

(12)

(21) Application number: 88200859.2

(22) Date of filing: 03.05.88

(51) Int. Cl.⁴: **C09D 3/58 , C08K 3/02 , C09D 5/18**

(30) Priority: 05.05.87 NL 8701056

(43) Date of publication of application:
09.11.88 Bulletin 88/45

(84) Designated Contracting States:
BE CH DE FR GB IT LI NL SE

(71) Applicant: STAMICARBON B.V.
Mijnweg 1
NL-6167 AC Geleen(NL)

(72) Inventor: Setzer, Werner
Weissdornweg 14/69
D-7400 Tübingen(DE)

(54) **Thermosetting powdery coating composition.**

(57) The invention relates to a thermosetting powdery coating compositions substantially consisting of epoxy resin, hardener, filler and a fire-resistant additive, and is characterized in that the fire-resistant additive used is finely distributed red phosphorus.

EP 0 290 095 A1

# THERMOSETTING POWDERY COATING COMPOSITION

The invention relates to a thermosetting powdery coating composition substantially consisting of epoxy resin, hardener, filler and a fire-resistant additive.

Thermosetting epoxy resin containing coating compositions are used for, among other things, the coating of electronic parts. Such coating is intended, among other things, to provide protection against mechanical damage and corrosion and must not affect the operation of the electronic part. Epoxy resins are well suited for this purpose, but the flammability is felt to be a disadvantage, because even a short circuit may cause the material to catch fire.

It is known in the art how to make epoxy resin mixtures flame-retardant by using antimonic oxide (Sb$_2$O$_3$) in combination with brominated compounds as fire-resistant additive. As brominated compound tetrabromobisphenol-A is mostly used, as early as in the epoxy resin preparation phase, or octabromodiphenyl. Their fire resistance is sufficient (tested according to UL 94, they can easily be classified as V-O). Antimonic oxide, however, is toxic and is suspected of having carcinogenic properties, while, when burning, the bromium compounds produce highly corrosive waste products.

It has also been suggested to use ammonium polyphosphate, which, in the burning process, only releases ammonia. However, the effect of this compound is not so great. Also, the insulating properties of the coating in a humid environment are influenced highly adversely by the water solubility of the said compound.

It has also been suggested to use aluminiumtrihydroxide. However, it is necessary to apply 35-50 wt.% for sufficient working, which results in bad mechanical properties.

The object of the invention is to provide a thermosetting powdery coating composition suitable for coating electronic parts, such coating having fire-resistant properties with mechanical and insulating properties virtually as good as those of coatings having bad fire-resistant properties.

The object of the invention is also to find an additive which is less toxic and which does not give corrosive waste products when burning.

This object is achieved according to the invention by using as fire-resistant additive finely distributed red phosphorus.

Indeed, red phosphorus as such is flammable, but when it is embedded in a matrix, it has flame-retardant or fire-resistant properties.

It is known to make powder compositions with epoxy resin and red phosphorus with flame retardant characteristics e.g. from GB-A-1112139 and FR-A-1564405, it was however unexpected, that this additive would give coating compositions with very good coating characteristics.

The epoxy resin coating composition according to the invention preferably substantially consists of:
   (a) 20-50% (wt) epoxy resin with at most 2 epoxy groups per molecule
   (b) 0-50% (wt) epoxy resin with at least 2 epoxy groups per molecule
   (c) 2-20% (wt) of a hardener
   (d) 2-20% (wt) red phosphorus
   (e) 10-60% (wt) filler
   (f) 0-2% (wt) flow-promoting agent
   (g) 0-20% (wt) pigments.

Component (b) preferably consists of an epoxy resin with 3-6 epoxy groups per molecule.

Component (d) is preferably applied in a finely distributed state, more particularly in microcapsules, and/or as a mixture of 30-70% (wt) phosphorus in - at room temperature - solid or liquid epoxy resin. In order to obtain an optimum combination of mechanical and fire-resistant properties, preference is given to the use of 3-15 and in particular 5-10% (wt) red phosphorus.

Component (a) may consist of, for instance, epoxy resins known in the art, preferably those based on epichlorohydrin and 2,2-bis-(4-hydroxyphenyl)propane with softening points of between 40°C and 90°C and an epoxy weight equivalent of between 450-2000. The softening point is particularly between 50 and 70°C.

Component (b) may consist of, for instance, epoxidized phenol-novolak or cresol-novolak resins with an epoxy weight equivalent of between 160 and 250 and with a softening point of between 40°C and 90°C. The softening point is preferably between 50°C and 70°C.

Component (c), the hardener for (a) and (b), may consist of, for instance, dicyandiamide, imidazole derivatives and imidazoline derivatives, acid anhydrides of trimellitic acid, pyromellitic acid, benzophenonetetracarboxylic acid, tetrahydrophthalic acid, cyclopentanedicarboxylic acid, hexahydrophthalic acid, partly esterified adducts of said carboxylic acids, aromatic amines, phenolic resins (resol or novolak) and epoxy resin-phenol adducts, alone or in combination.

The red phosphorus (d) must be applied as a finely distributed material and - in order to preclude explosions - then preferably mixed with organic compounds. As such its use in the form of a master-batch is highly suitable. Of course, the red phosphorus can be used together with other fire-resistant additives.

As fillers (e) can be used, for instance: quartz powder, aluminium, calcium, and magnesium silicates, calcium carbonate, barium sulphate, calcium sulphate and aluminium oxide, mixtures of these, optionally with smaller amounts of e.g. aluminium hydroxide, ammonium-polyphosphate and the like.

As flow-promoting agent (f) can be used, for instance: liquid polyacrylates, such as for instance polybutylacrylate and polyethylacrylate, fluorinated polymers such as, for instance, esters of polyethylene glycol and perfluoro-octanoic acid, polymeric siloxanes such as, for instance, polydimethyl siloxane or polymethylphenyl siloxane.

As pigments (g) can be used, for instance: titanium dioxide, iron oxide (yellow, brown, red, black), carbon black and organic pigments.

If so desired, other additives may further be used also, such as accelerators, release agents, viscosity reducing agents, etc.

The epoxy resin mixtures can be produced, for instance, by homogenization below the melting point of the resin or resins and by subsequent mixing above the melting point of the epoxy resin(s), for instance in a high-speed mixer and in an extruder with a jacket temperature of 100°C. After mixing, the mixture is cooled, reduced in size, pulverized and screened to leave particles of between 0-200 microns, preferably with a maximum of between 40-60 microns.

Example I

34 parts by weight epoxy resin (a) with an average epoxy weight equivalent of about 650, 2.5 parts by weight dicyandiamine, 0.5 part by weight imidazole as accelerator, 0.5 part by weight polyacrylic acid butyl ester as flow-promoting agent, 42.5 parts by weight calcium carbonate as filler with a grain size of 5 microns, 15 parts by weight dispersion of liquid epoxy resin with an epoxy weight equivalent of between 175-185 and a viscosity of 10 Pa.s at 25°C and finely distributed red phosphorus encapsulated in melamineformaldehyde resin and 5 parts by weight yellow iron oxide were homogenized in a high-speed mixer and subsequently extruded in a single-screw extruder (PR 46, Buss). The extrudate was reduced in size in a cross beater mill and subsequently ground. The powder was screened over a 150-micron screen. The thermosetting powder was put on plates measuring 127 x 12.5 x 0.5mm. With all 20 test plates, the flame resistance according to UL 94 (Underwriters Laboratories Inc. USA) conformed to V-O, the highest fire resistance category of this method.

Example II

In a manner analogous to example I, 29.5 parts by weight epoxy resin (type a), 7 parts by weight acid anhydride with an acid content of 10.7 meg/g and an anhydride content of more than 80% of the ber, 0.5 part by weight accelerator based on a substituted imidazole, 0.5 part by weight polyacrylic acid butyl ester, 42 parts by weight aluminium hydroxide (filler) with an average grain size of 5 microns, 15 parts by weight red phosphorus dispersion, 5 parts by weight titanium dioxide and 0.5 part by weight carbon black were extruded, ground and screened. Test plates conformed to V-O as in example I.

## Claims

1. Thermosetting powdery coating composition substantially consisting of epoxy resin, hardener, filler and a fire-resistant additive, characterized in that the fire-resistant additive used is finely distributed red phosphorus.

2. Coating composition according to claim 1, characterized in that it substantially consists of:

(a) 20-50% (wt) epoxy resin with at most 2 epoxy groups per molecule

(b) 0-50% (wt) epoxy resin with at least 2 epoxy groups per molecule

(c) 2-20% (wt) of a hardener

(d) 2-20% (wt) red phosphorus

(e) 10-60% (wt) filler

(f) 0-2% (wt) flow-promoting agent

(g) 0-20% (wt) pigments.

3. Coating composition according to claim 2, characterized in that component b is an epoxy resin with 3-5 epoxy groups per molecule.

4. Coating composition according to any one of claims 2-3, characterized in that component (d) is used in the form of microcapsules.

5. Coating composition according to any one of claims 2-4, characterized in that component (d) is used as a mixture with 30-70% (wt) red phosphorus and 70-30% (wt) of one of components a, b or c or a mixture of these.

6. Coating composition according to any one of claims 2-5, characterized in that 3-15% (wt) component (d) is used.

7. Coating composition according to claim 6, characterized in that 5-10% (wt) component (d) is used.

8. Coating composition according to any one of claims 2-7, characterized in that component (a) is an epoxy resin with an epoxy equivalent weight of between 450 and 2000 and component (b) an epoxy resin with an epoxy equivalent weight of between 160 and 250.

9. Coating composition according to any one of claims 2-8, characterized in that component (a) and, if so desired, component (b) are epoxy resins with softening points of between 40°C and 90°C.

10. Coating composition according to any one of claims 1-9, characterized in that the hardener is an imidalozine derivative, a phenolic resin, preferably with a softening point of between 80-100°C, an epoxy resin-phenol adduct, an aromatic amine, an epoxy-cresol novolak or epoxy-phenol novolak resin.

11. Product obtained by applying a coating composition according to any one of claims 1-10, to a substrate, and curing said coating composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | FR-A-1 564 405 (CHEMISCHE WERKE ALBERT) * Claims 1-8; example 5; page 5, lines 2-16 * | 1-11 | C 09 D 3/58 C 08 K 3/02 C 09 D 5/18 |
| X,D | GB-A-1 112 139 (SHELL INTERNATIONALE RESEARCH MAATSCHAPPIJ) * Claims; examples; page 3, lines 31-32 * | 1-11 | |
| X | CHEMICAL ABSTRACTS, vol. 85, 12th July 1976, page 105, no. 7362h, Columbus, Ohio, US; & JP-A-76 20 227 (DAI NIPPON TORYO CO., LTD) 18-02-1976 * Whole abstract * | 1-11 | |
| X | CHEMICAL ABSTRACTS, vol. 91, 3rd September 1979, page 69, no. 75806e, Columbus, Ohio, US; & JP-A-79 47 753 (HITACHI CHEMICAL CO., LTD) 14-04-1979 * Whole abstract * | 1-11 | |

TECHNICAL FIELDS
SEARCHED (Int. Cl.4)

C 08 K
C 08 L
C 09 D

The present search report has been drawn up for all claims

| Place of search | Date of completion of the search | Examiner |
|---|---|---|
| THE HAGUE | 08-08-1988 | HOFFMANN K.W. |